(19) Europäisches Patentamt / European Patent Office / Office européen des brevets

(11) **EP 2 157 290 B1**

(12) **EUROPEAN PATENT SPECIFICATION**

(45) Date of publication and mention of the grant of the patent:
**22.02.2017 Bulletin 2017/08**

(51) Int Cl.:
*F01K 7/20* (2006.01)      *F01K 13/02* (2006.01)
*F01K 23/10* (2006.01)

(21) Application number: **08425569.4**

(22) Date of filing: **21.08.2008**

(54) **A device and method for controlling the pressure of a steam turbine of a combined cycle plant of the "2+1" type and a bypass system thereof**

Vorrichtung und Verfahren zur Drucksteuerung einer Dampfturbine, kombinierte Zyklusanlage des Typs 1+2 und Umleitungssystem dafür

Dispositif et procédé pour le contrôle de la pression d'une turbine à vapeur dans une installation à cycle combiné de type 2+1 et système de dérivation correspondant

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**24.02.2010 Bulletin 2010/08**

(73) Proprietor: **ANSALDO ENERGIA S.P.A.**
**16152 Genova (IT)**

(72) Inventors:
• **Repetto, Enrico**
**16149 Genova (IT)**
• **Gruppi, Pietro**
**16146 Genova (IT)**

(74) Representative: **Bongiovanni, Simone et al**
**Studio Torta S.p.A.**
**Via Viotti, 9**
**10121 Torino (IT)**

(56) References cited:
EP-A- 0 615 061      JP-A- 55 069 713
US-A- 4 201 924      US-A- 4 576 124

**Description**

The present invention relates to a device for controlling the pressure of a steam turbine of a combined cycle plant of the "2+1" type and a bypass system thereof.

It is known that steam turbine control in combined cycle plants is complex and very problematic, because various events must be addressed to in both normal and transient operating conditions. A particularly complex case is that of combined cycle plants in which the steam is generated by two gas turbines with corresponding boilers (the so-called "2+1" type plants) and sent to a single steam turbine. Furthermore, it must be possible to use the gas turbines both singularly and in combination and, however, the steps of starting up and shutting down the steam turbine are critical and must be appropriately coordinated considering the operating conditions of the gas turbines.

It is indeed worth noting that, in combined cycle plants, the operation of the steam turbine closely depends on the operating conditions of the gas turbines, because the exhaust gases of the latter provide the thermal energy required for the production of steam. The flow and temperature of the gas turbine exhaust gases, which is related to the produced electric load, thus determines the operating limits of the steam turbine.

Furthermore, it is worth noting that there are many independent suppliers in modern electric energy distribution networks. The control of network conditions, previously entrusted to a single subject, is now the responsibility of all suppliers and the plants must comply with often very strict standards. However, broad flexibility is required with regard to both intervention capacities for network regulation and to respond to extremely varying load requests.

For example, plant shutdown and consequent restarting have become relatively frequent events. Similarly, gas turbine load rejection conditions, in which the generators coupled to the gas turbines themselves remain isolated from the network, are not rare. In this case, the gas turbines operate with a minimum load required to feed the plant auxiliaries and the steam turbine must be taken to a compatible operating condition (normally jamming).

The currently available steam turbine pressure control apparatuses are not satisfactory because they are still very complex and require considerable diligence and preparation by powerplant operators.

This firstly implies higher error risks, precisely for the relevance of the human factor. Furthermore, the installation, testing and maintenance costs and times are also very high and require complex, difficult procedures.

US-A-4 201 924 discloses a control device for a combined cycle power plant. The plant includes two heat recovery steam generators, which supplied by respective exhaust of respective gas turbines and feed a steam flowrate to a steam turbine. The control device operates a control valve and a bypass valve to regulate the steam flowrate based on a sliding pressure control.

It is thus the object of the present invention to provide a device for controlling the pressure of a steam turbine of a combined cycle plant and a bypass system thereof, which allow to overcome the described limitations.

According to the present invention, a device for controlling the pressure of a steam turbine of a combined cycle plant and a bypass system thereof is provided as claimed in claim 1.

The present invention will now be described with reference to the accompanying drawings, which show a non-limitative embodiment thereof, in which:

- figure 1 is a simplified block diagram of a combined cycle plant, incorporating a control device according to an embodiment of the present invention;
- figure 2 is a more detailed block diagram of a first portion of the plant in figure 1;
- figure 3 is a more detailed block diagram of a second portion of the plant in figure 1;
- figure 4 is a more detailed block diagram of a third portion of the plant in figure 1;
- figure 5 is a more detailed block diagram of the control device in figure 1;
- figure 6 is a more detailed block diagram of a first element of the control device in figure 1;
- figures 7-12 are charts showing magnitudes related to the device in figure 6; and

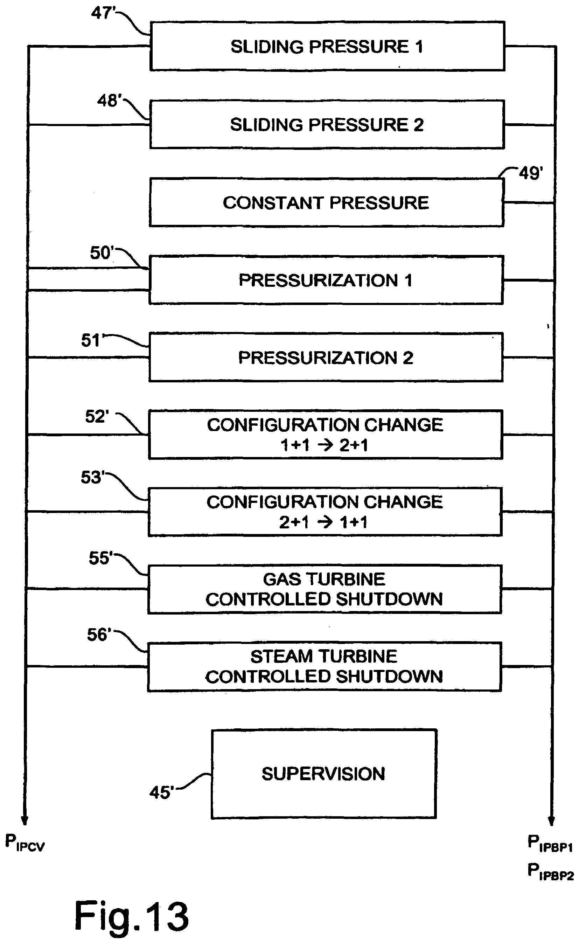

- figure 13 is a detailed block diagram of a second element of the device in figure 6.

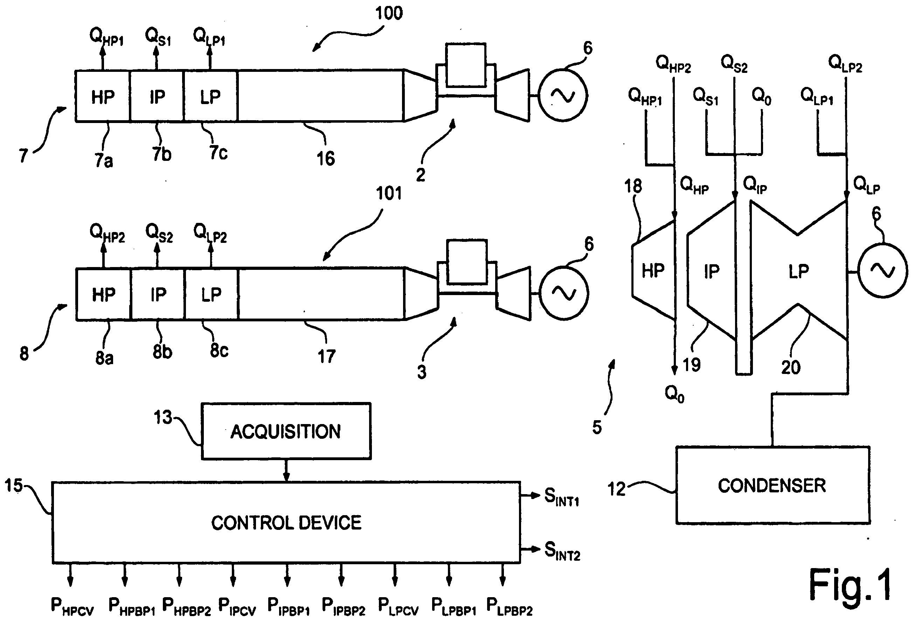

As shown in figure 1, a combined cycle plant for the production of electric energy includes a first gas turbine 2, a second gas turbine 3, a steam turbine 5, three alternators 6, respectively coupled to the gas turbines 2, 3 and to the steam turbine 5, a first steam generator 7, a second steam generator 8, a condenser 12, an acquisition module 13 and a control device 15 associated to the steam turbine 5 and to the bypass system thereof. The gas turbines 2, 3 operate under the control of corresponding regulator devices, of known type and not shown herein. The exhaust fumes of the first gas turbine 2 and of the second gas turbine 3 are channeled along pipes 16, 17 and supply heat sources for the first steam generator 7 and for the second steam generator 8, respectively, which in turn feed the steam turbine 5. Specifically, the first gas turbine 2 and the first steam generator 7 form a first steam feeding system 100, while the second gas turbine 3 and the second steam generator 8 form a second steam feeding system 101. The first steam feeding system 100 and the second steam feeding system 101 may be selectively coupled, either separately or simultaneously, to the steam turbine 5. More precisely, the plant 1 may operate in two different configurations. "Configuration 2+1" means a configuration of the plant 1 in which the first steam feeding system 100 and the second steam feeding system 101 are simultaneously coupled to the steam turbine 5. Both gas turbines 2, 3 operate in combined cycle mode with the steam turbine 5. "Configuration 1+1" means a configuration of the plant 1 in which only one of either the first steam feeding system 100 or the second steam feeding system 101 is coupled to the steam turbine 5. In this manner, only one of the gas turbines 2, 3 operates in combined cycle mode with the steam turbine 5, while the other is not active or operates autonomously in open cycle mode.

The steam turbine 5 includes a high-pressure section 18, an intermediate-pressure section 19 and a low-pressure section 20. In a different embodiment (not shown), the steam turbine includes a high-pressure section and an intermediate-low-pressure section.

The first steam generator 7 and the second steam generator 8 include corresponding high-pressure elements 7a, 8a, intermediate-pressure elements 7b, 8b and low-pressure elements 7c, 8c, each of which includes an economizer, a drum, an evaporator and a superheater (the intermediate-pressure elements 7b, 8b also include a resuperheater), the operation of which is known and will not be discussed in detail.

The high-pressure elements 7a, 8a, the intermediate-pressure elements 7b, 8b and the low-pressure elements 7c, 8c receive water from the condenser 8, through appropriate feeding pumps (not shown).

The high-pressure elements 7a, 8a feed a first high-pressure steam flow rate $Q_{HP1}$ and a second high-pressure steam flow rate $Q_{HP2}$ to the high-pressure section 18 of the steam turbine 5, respectively.

The intermediate-pressure elements 7b, 8b supply a first intermediate-pressure superheated steam flow rate $Q_{S1}$ and a second intermediate-pressure superheated steam flow rate $Q_{S2}$, respectively, which are added to the outlet flow rate $Q_o$ from the high-pressure section 17 of the steam turbine 5 to form an intermediate-pressure steam flow rate $Q_{IP}$ which, resuperheated, is fed to the intermediate-pressure section 19 of the steam turbine 5.

The low-pressure elements 7c, 8c feed a first low-pressure steam flow rate $Q_{LP1}$ and a second low-pressure steam flow rate $Q_{LP2}$ to be fed to the low-pressure section 20 of the steam turbine 5, respectively.

The exhaust of the low-pressure section 20 of the steam turbine 5 is connected to the condenser 12, while the exhaust of the intermediate-pressure section 19 is connected to the inlet of the low-pressure section 20.

In order to regulate the pressure conditions inside the drums and the superheaters (not shown) of the high-pressure elements 7a, 8a, the intermediate-pressure elements 7b, 8b and the low-pressure elements 7c, 8c of the steam generators 7, 8, as well as the steam flow to the high-pressure section 18, the intermediate-pressure section 19 and the low-pressure section 20, the steam turbine 5 is provided with a plurality of regulation valves, controlled by means of the control device 15, as explained in detail below. The regulation valves include:

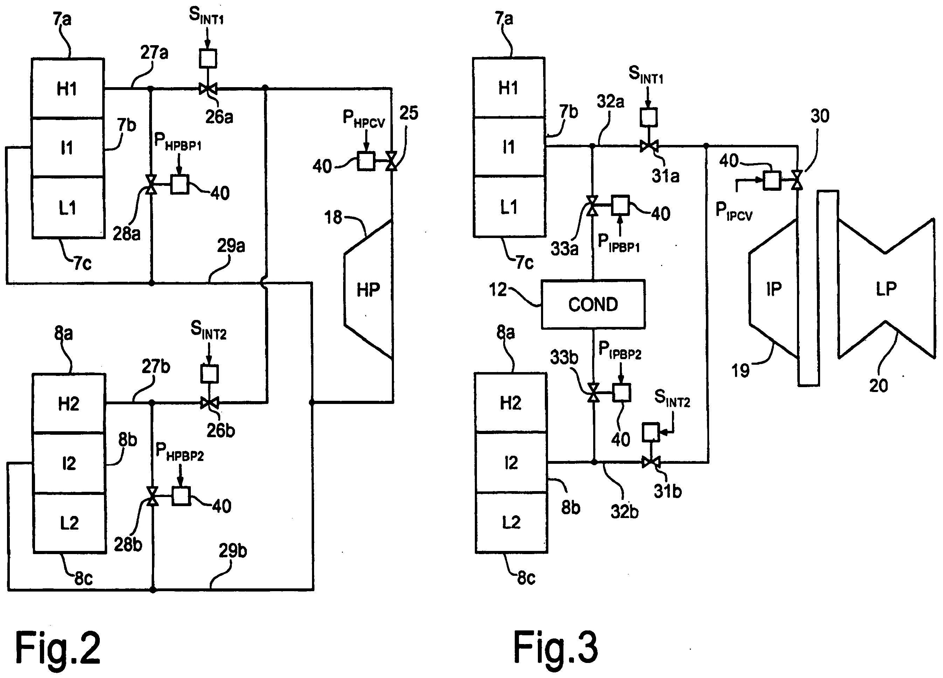

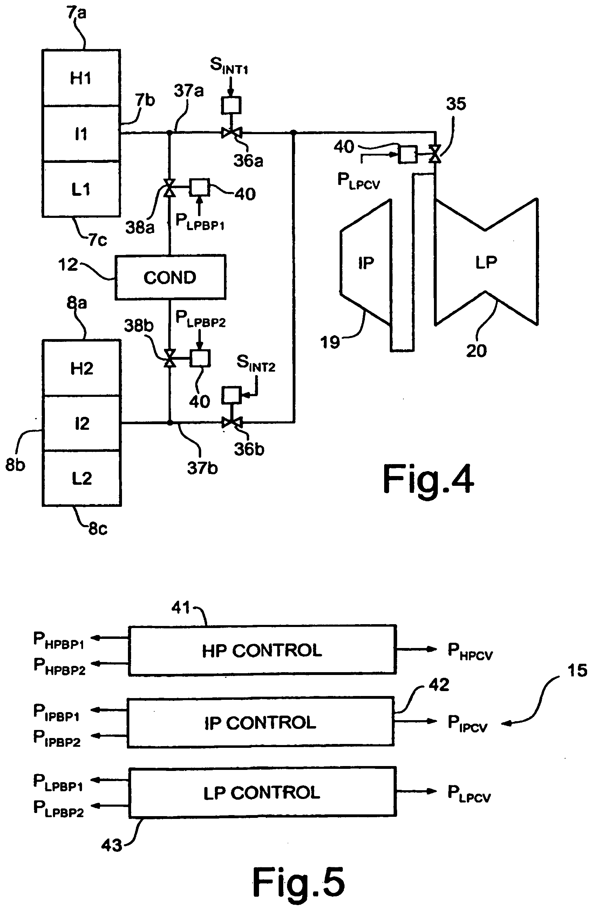

one or more high-pressure inlet valves 25, for regulating the steam flow entering the high-pressure section 18 of the steam turbine 5 (figure 2; hereinafter, reference will be made to a single high-pressure inlet valve 25 for simplicity);
a first high-pressure stop valve 26a, arranged along a pipe 27a connecting the high-pressure element 7a of the first steam generator 7 to the high-pressure inlet valve 25;
a first high-pressure bypass valve 28a, arranged between a point of the pipe 27a upstream of the first high-pressure stop valve 26a and a pipe 29a connecting the exhaust of the high-pressure section 18 of the steam turbine 5 to the intermediate-pressure element 7b of the first steam generator 7;
a second high-pressure stop valve 26b, arranged along a pipe 27b connecting the high-pressure element 8a of the second steam generator 8 to the high-pressure inlet valve 25;
a second high-pressure bypass valve 28b, arranged between a point of the pipe 27b upstream of the second high-pressure stop valve 26b and a pipe 29b connecting the exhaust of the high-pressure section 18 of the steam turbine 5 to the intermediate-pressure element 8b of the second steam generator 8;
an intermediate-pressure inlet valve 30, for regulating the steam flow entering the intermediate-pressure section 19 of the steam turbine 5 (figure 3);
a first intermediate-pressure stop valve 31a, arranged along a pipe 32a connecting the intermediate-pressure element 7b of the first steam generators 7 to the intermediate-pressure inlet valve 30;
a first intermediate-pressure bypass valve 33a, arranged between a point of the pipe 32a upstream of the first intermediate-pressure stop valve 31a and the condenser 12;
a second intermediate-pressure stop valve 31b, arranged along a pipe 32b connecting the intermediate-pressure element 8b of the second steam generator 8 to the intermediate-pressure inlet valve 30;
a second intermediate-pressure bypass valve 33b, arranged between a point of the pipe 32b upstream of the second intermediate-pressure stop valve 31b and the condenser 12;
a low pressure inlet valve 35, for regulating the steam flow entering the low-pressure section 20 of the steam turbine 5 (figure 4);
a first low-pressure stop valve 36a, arranged alone a pipe 37a connecting the low-pressure element 7c of the first steam generator 7 to the low-pressure inlet valve 35;
a first low-pressure bypass valve 38a, placed between a point of the pipe 37a upstream of the first low-pressure stop valve 36a and the condenser 12;
a second low-pressure stop valve 36b, placed along a pipe 37b connecting the low-pressure element 8c of the second steam generator 8 to the low-pressure inlet valve 35;
a second low-pressure bypass valve 38b, arranged between a point of the pipe 37b upstream of the second low-pressure stop valve 36b and the condenser 12.

There are moreover vent valves, of known type and not shown here, which are only used at an initial step of pressurizing the steam generators 7, 8 and then are closed.

All the aforementioned valves are provided with corresponding regulators 40, known per se, reciprocally independent and operating on actuating members of the valves themselves, so that the pressure upstream of each valve tends to a corresponding-pressure set point.

The control device 15, which will be described below in detail, generates appropriate pressure set points for the regulators 40 of each inlet valve 25, 30, 35, and of the bypass valves 28a, 28b, 33a, 33b, 38a, 38b on the basis of the operating conditions of the plant 1, which are determined using measurements of operative quantities and current status signal values, supplied by the acquisition module 13. Furthermore, the control device 15 generates control signals for selectively determining the opening or closing of the stop valves 26a, 26b, 31a, 31b, 36a, 36b. The pressure set points are calculated according to a control type called "sliding pressure", as will be explained in greater detail below.

With reference to figure 5, the control device 15 includes a high-pressure control stage 41, an intermediate-pressure control stage 42 and a low-pressure control stage 43. The intermediate-pressure control stage 42 essentially operates in the same manner as the high-pressure control stage 41 and therefore will not be deeply described. It is however understood that the description regarding the high-pressure control stage 41 also applies to the intermediate-pressure control stage 42.

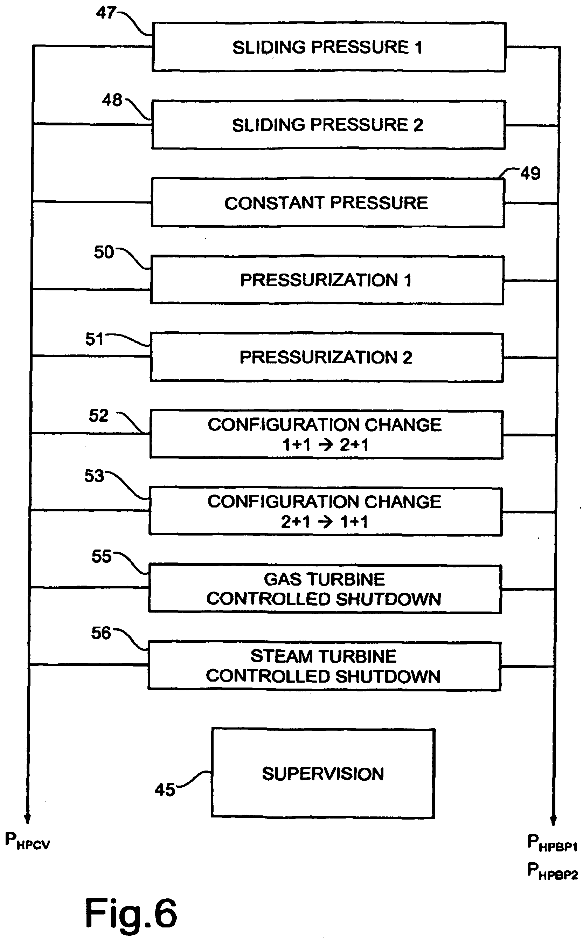

Figure 6 shows a block diagram of the high-pressure control stage 41, which includes a supervisor module 45 and a plurality of operative modules, which may be selectively activated by the supervisor module 45 according to the operating conditions of the plant 1.

In the embodiment described herein, the operative modules include:

a first sliding pressure module 47 (2+1);
a second sliding pressure module 48 (1+1);
a constant pressure module 49;
a first pressurization module 50;
a second pressurization module 51;
a first configuration change module 52;
a second configuration change module 53;
a steam turbine controlled shutdown module 55;
a gas turbine controlled shutdown module 56.

Each of the operative modules, when activated by the supervisor module 45, supplies a common inlet pressure set point $P_{HPCV}$, a first bypass pressure set point $P_{HPBP1}$ and a second bypass pressure set point $P_{HPBP2}$, for the regulator 40 of the high-pressure inlet valve 25, for the first high-pressure bypass valve 28a and for the second high-pressure bypass valve 28b, respectively. The operative module actually also supply pressure set points for the regulators 40 of the vent valves (not shown). Ordinarily, however, the vent pressure set points serve to keep the corresponding vent valves closed, which in practice only intervene during the first steps of starting up.

The operating conditions of the plant 1 are detected by the supervisor module 45 on the basis of measurements of a plurality of operative quantities, including:

the first high-pressure steam flow rate $Q_{HP1}$ at the high-pressure element 7a outlet of the first steam generator 7; and
the second high-pressure steam flow rate $Q_{HP2}$ at the high-pressure element 8a outlet of the second steam generator 8;
the steam pressure upstream of the high-pressure inlet valve 25 (controlled pressure $P_{HP}$).

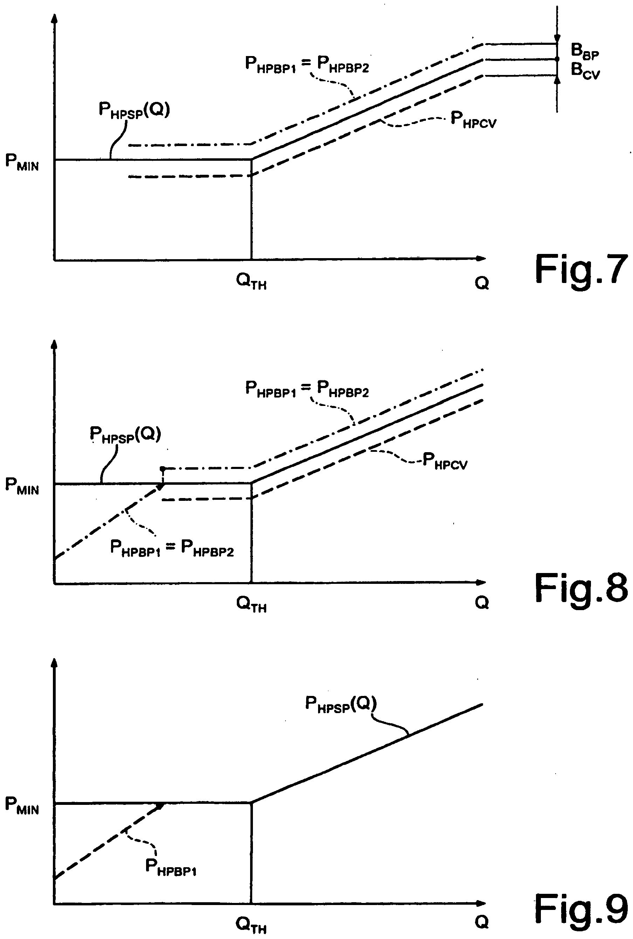

In ordinary operating conditions, the gas turbines 2, 3 operate with essentially equal loads and the steam turbine 5 is fed with steam supplied by both steam generators 7, 8. In these conditions, the supervisor module 45 activates the first sliding pressure module 47 which imposes the normal control mode, i.e. the sliding pressure control mode. Specifically, the common inlet pressure set point $P_{HPCV}$ is determined according to the first high-pressure steam flow rate $Q_{HP1}$, and to the second high-pressure steam flow rate $Q_{HP2}$ (which are indicative of the current load of the first gas turbine 2 and the second gas turbine 3, respectively), so that the controlled pressure $P_{HP}$ follows a preset operative curve $P_{HPSP}(Q)$, qualitatively illustrated by a solid line in figure 7. The operative curve $P_{HPSP}(Q)$ has a first constant segment, at a minimum value $P_{MIN}$, for steam flow rate values $Q_{HP}$ lower than a threshold $Q_{TH}$ which corresponds to approximately half a nominal flow rate value. For values higher than the threshold $Q_{TH}$, the operative curve $P_{HPSP}(Q)$ has a second increasing segment. In the embodiment described herein, the second segment of the operative curve $P_{HPSP}(Q)$ is essentially linear with respect to the steam flow rate Q and corresponds to the natural pressure upstream of the high-pressure inlet valve 25, i.e. with the high-pressure inlet valve 25 completely open.

More in detail, the first sliding pressure module 47 determines a first inlet pressure set point $P_{HPCV1}$ on the basis of the first high-pressure steam flow rate $Q_{HP1}$, for the first steam generator 7, and a second inlet pressure set point $P_{HPCV2}$ on the basis of the second high-pressure steam flow rate $Q_{HP2}$, for the second steam generator 8. Thus, the highest is used by the sliding pressure module 36 to determine the common inlet pressure set point $P_{HPCV}$ from the operative curve $P_{HPSP}(Q)$ in the following manner:

$$P_{HPCV1} = P_{HPSP}(Q_{HP1}) \qquad\qquad (1a)$$

$$P_{HPCV2} = P_{HPSP}(Q_{HP2}) \qquad\qquad (1b)$$

$$P_{HPCV} = \max\{P_{HPCV1}, P_{HPCV2}\} - B_{CV} \qquad\qquad (1c)$$

where $B_{CV}$, is an inlet bias. The common inlet pressure set point $P_{HPCV}$ is thus slightly lower than the operative curve $P_{HPSP}(Q)$, so that the high-pressure inlet valve 25 tends to remain completely open in normal operating conditions, with the high-pressure steam flow rates $Q_{HP1}$, $Q_{HP2}$ higher than the threshold $Q_{TH}$.

The first bypass pressure set point $P_{HPBP1}$ and the second bypass pressure set point $P_{HPBP2}$ are instead determined as follows, so as to keep the high-pressure bypass valves 28a, 28b always closed, but at the opening limit:

$$P_{HPBP1} = P_{HPBP2} = \max\{P_{HPCV1}, P_{HPCV2}\} + B_{BP} \qquad\qquad (2)$$

where $B_{BP}$ is a bypass bias.

Therefore, in practice, both the common inlet pressure set point $P_{HPCV}$, and the bypass pressure set points $P_{HPBP1}$, $P_{HPBP2}$ track the operative curve $P_{HPSP}(Q)$, according to the value of the high-pressure steam flow rates $Q_{HP1}$, $Q_{HP2}$.

When the supervisor module 45 detects a condition in which one of the steam feeding systems 100, 101 is coupled to the steam turbine 5, and thus only one of the gas turbines 2, 3 is operating in combined cycle mode, the second sliding pressure module 48 is activated instead of the first sliding pressure module 47 (in the example disclosed, the first steam feeding system 100, with the first gas turbine 2, is coupled to the steam turbine 5).

In this case, the common inlet pressure set point $P_{HPCV}$ is determined on the basis of only the inlet pressure set point of the steam generator coupled to the operating gas turbine (in the example, the first inlet pressure set point $P_{HPCV1}$ for the first steam generator 7). The pressure control is entrusted to the high-pressure inlet valve 25, which remains partially open during normal operation, because the controlled pressure $P_{HP}$ remains unchanged, while the high-pressure flow rate is essentially halved with respect to when both the gas turbines 2, 3 are available for the operation in combined cycle mode. The high-pressure bypass valve of the operating gas turbine remains closed.

The supervisor module 45 activates the constant pressure module 49 when predetermined abnormal conditions occur, which may be identified by either alarm values of one of the high-pressure steam flow rates $Q_{HP1}$, $Q_{HP2}$ and the controlled pressure $P_{HP}$, or by status signal values or sets of values of the plant 1. For example, conditions which determine the activation of the constant pressure module 49 are either invalid measurements of one of the high-pressure steam flow rates $Q_{HP1}$, $Q_{HP2}$ or the pressure control unavailability of one of the high-pressure bypass valves 28a and 28b and the inlet valve 25 of the steam turbine 5 at the same time.

When the constant pressure module 49 is active, the inlet pressure set point $P_{HPCV}$ is constant, regardless of the high-pressure steam flow rates $Q_{HP1}$, $Q_{HP2}$ and of the load of the gas turbines 2. Furthermore, the bypass pressure set points $P_{HPBP1}$, $P_{HPBP2}$ are equal to the inlet pressure set point $P_{HPCV}$, increased by the bypass bias $B_{BP}$.

The first pressurization module 50 is activated when, at the start-up, both the gas turbines 2, 3 are operating for the combined cycle mode and the steam turbine 5 must be operated according to them.

The gas turbines 2, 3 are independently started up and taken to a condition in which they provide essentially equal loads. During this step, the first pressurization module 50 keeps the stop valves 26a, 26b closed and the pressure control in the high-pressure elements 7a, 8a of the steam generators 7, 8 is entrusted to the high-pressure bypass valves 28a, 28b. More precisely (figure 8), the first bypass pressure set point $P_{HPBP1}$ and the second bypass pressure set point $P_{HPBP2}$ are determined so that the pressures in the high-pressure element 7a of the steam generator 7 and in the high-pressure element 8a of the steam generator 8, respectively, increase according to the load essentially according to a linear ramp, until the minimum pressure $P_{MIN}$ is reached. Once the minimum pressure $P_{MIN}$ has been reached (independently in the two steam generators 7, 8), the load of each gas turbine 2, 3 (which is essentially the same) is kept constant until the steam conditions (pressure and temperature) are homogenous, regular and similar for the two steam generators 7 and 8. The transients being depleted, the first high-pressure steam flow rate $Q_{HP1}$ and the second high-pressure steam flow rate $Q_{HP2}$ are essentially the same.

The first pressurization module 50 verifies the stability of the thermodynamic conditions in the high-pressure elements 7a, 8a of the steam generators 7, 8 and, then, determines the start-up of the steam turbine. Specifically, the stop valves 26a, 26b are completely opened by corresponding control signals $S_{INT1}$, $S_{INT2}$ and the gas turbine load 2 and 3 is kept constant. Firstly, the pressure is controlled by the high-pressure bypass valves 28a, 28b, the position of which is not subject to variations during this step. Meanwhile, the steam turbine 5 is started and connected to the network. The high-pressure inlet valve 25 is thus partially opened in a position control mode (i.e. a degree of opening is assigned thereto, regardless of the conditions of the high-pressure steam flow rate) and this causes the gradual closing of the high-pressure bypass valves 28a, 28b, which control the pressure upstream of the high-pressure inlet valves 25, in order to keep it always constant during the transient. When the first of the high-pressure bypass valves 28a, 28b is completely closed, the first pressurization module 50 places the high-pressure inlet valve 25 in pressure control mode, thus supplying the inlet pressure set point $P_{HPCV}$. Furthermore, by keeping also the bypass valves 28a and 28b in the pressure control mode, the first pressurization module 50 adds the bypass bias $B_{BP}$ to the first bypass pressure set point $P_{HPBP1}$ and to the second bypass pressure set point $P_{HPBP2}$, as indicated in the equation (2), so as to rapidly close even the other high-pressure bypass valve 28a, 28b. Concurrently, the common inlet pressure set point $P_{HPCV}$ is further determined in accordance with the equations (1a)-(1c).

It is worth noting that the first pressurization module 50 controls the pressure in a completely similar manner to that described above, even when the steam turbine 5 needs to be started at pressures higher than the minimum pressure $P_{MIN}$.

Therefore, in practice, the first pressurization module 50 is intended to control the pressure during the step of pressurizing, in which the pressure in the high-pressure elements 7a, 8a of the steam generators 7, 8 reaches the minimum pressure $P_{MIN}$, and the step of starting the steam turbine 5, until the pressure control passes to the high-pressure inlet valve 25. Therefore, the supervisor module 45 deactivates the first pressurization module 50 and selects the first sliding pressure module 47.

The second pressurization module 51 is activated when, at the start-up, only one of the gas turbines 2, 3 is available for combined cycle operation, while the other remains either off or operates autonomously in open cycle mode. Reference will be made below to the case in which the gas turbine 2 is only available for the combined cycle mode. It is obviously understood that the description also applies to the case in which the gas turbine 2 is standing or operating in open cycle mode and the gas turbine 3 is only available for the combined cycle mode.

When the gas turbines 2 is started (figure 9), the second pressurization module 51 keeps the stop valve 26a initially open and the stop valve 26b closed, while the pressure control in the high-pressure element 7a of the steam generator 7 is carried out through the high-pressure bypass valve 28a. More specifically, the first bypass pressure set point $P_{HPBP1}$ is determined so that the pressure in the high-pressure element 7a of the steam generator 7 increases according to the gas turbine 2 load essentially according to a linear ramp, until the minimum pressure $P_{MIN}$ is reached. Once the minimum pressure $P_{MIN}$ is reached, in homogenous, regular steam pressure and temperature conditions, the second pressurization module 51 determines the starting-up of the steam turbine, with the load of the gas turbine 2 kept constant. Specifically, the pressure is controlled through the high-pressure bypass valve 28a, the position of which is not subject to variations during this step. In the meantime, the steam turbine 5 is started and connected to the network. The high-pressure inlet valve 25 is thus partially opened in position control mode (i.e. a degree of opening is assigned thereto, regardless of the conditions of the high-pressure steam flow rate) and this causes the gradual closing of the high-pressure bypass valves 28a, 28b, which controls the pressure upstream of the high-pressure inlet valves 25, in order to keep it always constant during the transient. When the high-pressure bypass valves 28a is completely closed, the second pressurization module 51 places the high-pressure inlet valve 25 in pressure control mode, thus supplying the inlet pressure set point $P_{HPCV}$. Furthermore, by keeping also the bypass valve 28a in pressure control mode, the second pressurization module 51 adds the bypass bias $B_{BP}$ to the first bypass pressure set point $P_{HPBP1}$, as shown in the equation (2). Furthermore, at the same time, the common inlet pressure set point $P_{HPCV}$ is determined on the basis of the operative curve $P_{HPSP}(Q)$. In this case, however, the high-pressure inlet valve 25 remains partially open, because the first high-pressure flow rate $Q_{HP1}$ is only present, while the regulated pressure value $P_{HP}$ is equal to when both gas turbines 2, 3 operate in combined cycle mode with the steam turbine 5.

It is worth noting that the second pressurization module 51 controls the pressure in a manner which is completely similar to that previously described even in the case in which the steam turbine 5 needs to be started at pressures higher than the minimum pressure $P_{MIN}$.

The second pressurization module 51 is thus intended to control the pressure during the step of pressurizing one of the steam generators 7, 8, until the desired minimum pressure $P_{MIN}$ is reached at which the steam turbine is operated (either equal to $P_{MIN}$, or for higher pressure values), and during the step of starting-up the steam turbine 5, until the pressure control goes to the high-pressure inlet valve 25. The supervisor module 45 thus deactivates the second pressurization module 51 and selects the second sliding pressure module 48.

The first configuration change module 52 is activated by the supervisor module 45 when transition from the 1+1 configuration to the 2+1 configuration is required. The change of configuration may be needed by sudden changes of electric load required by the network to which the plant 1 is connected, or may be scheduled according to known load request cycles, or may be due to reasons of protecting the gas turbine which is excluded from the combined cycle operation, or for reasons of routine maintenance of the turbine.

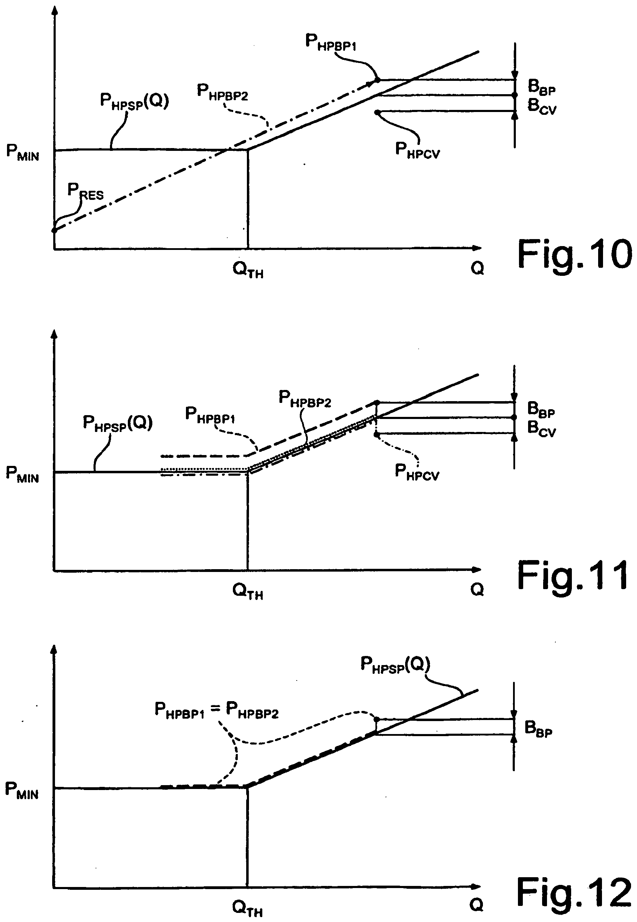

By way of example, the 1+1 operative configuration will be taken into consideration, in which the gas turbine 2 operates in combined cycle mode with the steam turbine 5, while the gas turbine 3 is still. At first (figure 10), the gas turbine 3 is started and the load is increased until the load of the already operated gas turbine 2 is reached. During this step, the stop valve 26b is closed and the high-pressure element 8a of the steam generator 8 is pressurized using the high-pressure bypass valve 28b for the regulation. Specifically, the first configuration change module 52 determines the second bypass pressure set point $P_{HPBP2}$ so that the pressure in the high-pressure element 8a of the steam generator 8 increases according to an essentially linear ramp up to the controlled pressure value $P_{HP}$. More precisely, the ramp of the second bypass pressure set point $P_{HPBP2}$ starts from a residual pressure value $P_{RES}$ in the boiler and proceeds until the point defined by the first bypass pressure set point $P_{HPBP1}$ and by the value of the first high-pressure steam flow rate $Q_{HP1}$ is reached.

The load of each gas turbine 2, 3 is kept constant until the steam conditions (pressure and temperature) are homogenous, regular and similar for the two steam generators 7 and 8; once these conditions have been reached, the first configuration change module 52 opens the stop valve 26b. The pressure is controlled by the high-pressure inlet valve 25, with the inlet pressure set point $P_{HPCV}$ calculated on the basis of the equations (1a)-(1c). The bypass pressure set points $P_{HPBP1}$, $P_{HPBP2}$ are calculated on the basis of the equation (2) and the high-pressure bypass valve 28b is also completely closed. The high-pressure inlet valve 25, which before the configuration change was partially open, is thus completely opened in pressure regulation mode (with constant set point) upon the progressive increase of the total high-pressure steam flow rate received in inputs.

Once the transition has been finished, the supervisor module 45 activates the first sliding pressure module 47.

The second configuration change module 53 is activated by the supervisor module 45 when passing from the 2+1 configuration to the 1+1 configuration is requested.

Once again, the case in which the gas turbine 2 operates in combined cycle mode with the steam turbine 5 will be taken into consideration, while the gas turbine 3, initially in combined cycle mode, is shut down in a controlled manner.

When the load of the gas turbine 3 noticeable decreases with respect to the load of the gas turbine 2, so as to make the steam conditions (pressure and temperature) heterogeneous for the two steam generators 7 and 8, the second configuration change module 53 closes the stop valve 26b and removes the inlet bias $B_{CV}$ of the inlet pressure set point $P_{HPCV}$ and the bypass bias $B_{BP}$ from the second bypass set point $P_{HPBP2}$ (figure 11). The inlet pressure set point $P_{HPCV}$ and the second bypass set point $P_{HPBP2}$ are thus directly determined from the operative curve $P_{HPSP}(Q)$, as follows:

$$P_{HPCV1} = P_{HPSP}(Q_{HP1}) \qquad (3a)$$

$$P_{HPCV2} = P_{HPSP}(Q_{HP2}) \qquad (3b)$$

$$P_{HPCV} = \max\{P_{HPCV1}, \; P_{HPCV2}\} = P_{HPCV1} \qquad (3c)$$

$$P_{HPBP1} = P_{HPSP}(Q_{HP1}) + B_{BP} \qquad (4a)$$

$$P_{HPBP2} = P_{HPSP}(Q_{HP2}) \qquad (4b)$$

As the gas turbine 3 load and the corresponding second high-pressure steam flow rate $Q_{HP2}$ decrease, the high-pressure inlet valve 25 tends to close, for keeping the controlled pressure $P_{HP}$ at the inlet pressure set point $P_{HPCV}$.

Finally, the supervisor module 45 activates the second sliding pressure module 48.

The steam turbine controlled shutdown module 55 is activated by the supervisor module 45 when the steam turbine 5 either needs to be stopped or jams. In this case, the high-pressure inlet valve 25 is placed in position control mode and is provided with a stop position set point $POS_{SD}$ by the controlled shutdown module 55 so as to cause the shutdown of the steam turbine 5. When the shutdown of the steam turbine 5 is detected, the bypass bias $B_{BP}$ is removed from the bypass pressure set points $P_{HPBP1}$, $P_{HPBP2}$, which are thus directly obtained from the operative curve $P_{HPSP}(Q)$.

The gas turbine controlled shutdown module 56 is activated by the supervisor module 45 when both gas turbines 2, 3 are simultaneously stopped (high voltage switch opening). In this case, the steam turbine 5 is also jammed and the gas turbine controlled shutdown module 56 takes the stop valves 26a, 26b to a completely closed position. The bypass bias $B_{BP}$ is again applied to the bypass pressure set points $P_{HPBP1}$, $P_{HPBP2}$, in order to keep the bypass valves 28a, 28b closed at full rate for preserving the maximum pressure value in the boiler for the next plant restart.

As previously mentioned, the above is applied essentially without any variations even to the intermediate-pressure control stage 42, which is only diagrammatically shown in the figure. The intermediate-pressure control stage 42 includes a supervisor module 45' and a plurality of operative modules including:

a first sliding pressure module 47';
a second sliding pressure module 48':
a constant pressure module 49';
a first pressurization module 50';
a second pressurization module 51';
a first configuration change module 52';
a second configuration change module 53';
a steam turbine controlled shutdown module 55';
a gas turbine controlled shutdown module 56.

Each of the operative modules, when activated by the supervisor module 45', supplies an inlet pressure set point $P_{IPCV}$, and a first bypass pressure set point $P_{IPBP1}$. and a second bypass pressure set point $P_{IPBP2}$ for the intermediate-pressure inlet valve 30 of the gas turbine 5, for the first intermediate-pressure bypass valve 33a and for the second intermediate-pressure bypass valve 33b, respectively. The intermediate-pressure control stage 42 also operates on the basis of a sliding pressure type control, using an operative curve $P_{IPSP}(Q)$ similar to the operative curve $P_{HPSP}(Q)$ of the high-pressure control stage 41. The operative curve $P_{IPSP}(Q)$ is also expressed according to the high-pressure steam flow rate $Q_{HP}$.

The low-pressure control stage 43 further generates pressure set points for the low-pressure inlet valve 35, for the low-pressure bypass valve 38a and for the second low-pressure bypass valve 38c. The pressure set points for the regulators of the aforesaid valves are generated according to a control of the "constant pressure" type.

The described control device allows to advantageously increase the level of automation in controlling combined cycle plants, specifically with regards to steam turbines. The control device is indeed able to recognize the plant operating conditions on the basis of detected parameters and status signals and to consequently select the most appropriate operating mode, while constantly controlling the pressure of the steam fed to the steam turbine. Plant reliability is thus improved.

**Claims**

1.   A control device of a steam turbine of a combined cycle plant and of a bypass system thereof, including:

an acquisition module (13), for acquiring measurements of operative quantities ($Q_{HP1}$, $Q_{HP2}$, $P_{HP}$) of a combined cycle plant (1) including a steam turbine (5) and first and second steam feeding systems (100, 101), which may be selectively coupled, either separately or simultaneously, to the steam turbine (5) and include a first gas turbine (2) and a first steam generator (7), and a second gas turbine (3) and a second steam generator (8), respectively;
a plurality of calculation modules (47-56, 47'-56'), configured to determine, according to corresponding control modes:

at least one of a first pressure set, point ($P_{RPCV}$) for a regulator (40) of a high-pressure inlet valve (25) of a high-pressure section (18) of the steam turbine (5), and a second pressure set point ($P_{rpcv}$) for a regulator (40) of an intermediate-pressure inlet valve (30) of an intermediate-pressure section (19) of the steam turbine (5);

at least one of a third pressure set point ($P_{HPBP1}$) for a regulator (40) of a first high-pressure bypass valve (28a), operatively connected to a high-pressure element (7a) of the first steam generator (7), and a fourth pressure set point ($P_{IPBP1}$) for a regulator (40) of a first intermediate-pressure bypass valve (33a), operatively connected to an intermediate-pressure element (7b) of the first steam generator (7); and

at least one of a fifth pressure set point ($P_{HPBP2}$) for a regulator (40) of a second high-pressure bypass valve (28b), operatively connected to a high-pressures element (8a) or the second steam generator (8), and a sixth pressure set point ($P_{IPBP2}$) for a regulator (40) of a second intermediate-pressure bypass valve (33b), operatively connected to an intermediate-pressure element (8b) of the second steam generator (8); and

a supervisor module (45), configured to detect an operating condition on the plant (1) on the basis of the operative quantities ($Q_{HP1}$, $Q_{HP2}$, $P_{HP}$) acquired by the acquisition module (13) and to selectively activate one of the calculation modules (47-56, 47'-56') in response to the detected operating condition;

wherein the operative quantities ($Q_{HP}$, $P_{HP}$) include a first hich-pressure steam flow rate ($Q_{HP1}$), supplied by the high-pressure element (7a) of the first steam generator (7), a second high-pressure steam flow rate ($Q_{HP2}$), supplied by the high-pressure element (8a) of the second steam generator (8) and a controlled pressure ($P_{HP}$), upstream of the high-pressure inlet valve (25), and wherein the calculation modules (47-56, 97'-56') include a first sliding pressure module (47), configured to be activated when the first and second steam feeding systems (100, 101) are simultaneously coupled to the steam turbine (5) and further configured to determine the first pressure set point ($P_{HPCV}$) according to an operative curve ($P_{HPSP}(Q)$) having a first constant segment, at a minimum pressure value ($P_{MIN}$), and a second increasing segment;

wherein the first sliding pressure module (47) is configured to determine the first pressure set point ($P_{HPCV}$) from the operative curve $P_{HPSP}(C)$ on the basis of the equations:

$$P_{HPCV1} = P_{HPSP}(Q_{HP1})$$

$$P_{HPCV2} = P_{HPSP}(Q_{HP2})$$

$$P_{HPCV} = \max\{P_{HPCV1}, P_{HPCV2}\} - B_{CV}$$

where $P_{HPCV}$ is the first pressure set point, $P_{HPSP}(Q)$ is the operative curve, $Q_{HP1}$ is the first high-pressure steam flow rate, $Q_{HP2}$ is the second high-pressure steam flow rate and $B_{CV}$ is a first bias value;

and wherein the first sliding pressure module (47) is configured to determine the third pressure set point ($P_{HPBP1}$) and the fifth pressure set point ($P_{KPBP2}$) from the operative curve $P_{HPSP}(Q)$ on the basis of the equation

$$P_{HPBP1} = P_{HPBP2} = \max\{P_{HPCV1}, P_{HPCV2}\} + B_{BP}$$

where $P_{HPBP1}$ and $P_{HPBP2}$ are the third pressure set point and the fifth pressures set point, respectively, and $B_{HP}$ is a second bias value.

2. A device according to claim 1, wherein the second segment of the operative curve ($P_{HPSP}(Q_{HP})$) is essentially linear with respect to the first high-pressure steam flow rate ($Q_{HP1}$) and to the second high-pressure steam flow rate ($Q_{HP2}$).

3. A device according to anyone of the foregoing claims, wherein the calculation modules (47-56, 47'-56') include a second sliding pressure module (48), configured to be activated when only one of the first and second steam feeding systems (100, 101) is coupled to the steam turbine (5) and further configured to determine the first pressure set point ($P_{HPCV}$), the third pressure set point ($P_{HPBP1}$) and the fifth pressure set point ($P_{HPBP2}$) according to the operative curve ($P_{HPSP}(Q)$) on the basis of the first high-pressure steam flow rate ($Q_{HP1}$), when only the first steam feeding system (100) is coupled to the steam turbine (5), and on the basis of the second high-pressure steam flow rate ($Q_{HP2}$), when only the steam feeding system (101) is coupled to the steam turbine (5).

4. A device according to anyone of the foregoing claims, wherein the calculation modules (47-56, 47'-56') include a first pressurization module (50), configured to be activated when, at the start-up of the plant (1), the first and second steam feeding systems (100, 101) must be simultaneously coupled to the steam turbine (5), and further configured to determine the third pressure set point ($P_{EPBP1}$) and the fifth pressure set point ($P_{HPBP2}$) so that the pressures in the high-pressure element (7a) of the first steam generator (7) and in the high-pressure element (8a) of the second steam generator (8) increase according to a substantially linear ramp, according to the first high-pressure stean flow rate ($Q_{HP1}$) and the second high-pressure steam flow rate ($Q_{HP2}$), respectively, until the minimum pressure value ($P_{MIN}$) is reached.

5. A device according to anyone of the foregoing claims, wherein the calculation modules (47-56, 41'-56') include a second pressurization module (51), configured to be activated when, at the start-up of the plant (1), only one of the first and the second steam feeding systems (100, 101) must be coupled to the steam turbine. (5), and is further configured to determine, between the third pressure set point ($P_{HPBP1}$) and the fifth pressure set point ($P_{HPBP2}$), the pressure set point corresponding to the steam feeding system (100, 101) coupled to the steam turbine (5), so that a pressure in the high-pressure element (7a, 8a) of the steam generator (7, 8) of the steam feeding system (100, 101) coupled to the steam turbine (5) increases according to a substantially linear ramp, according to the corresponding high-pressure steam flow rate ($Q_{HP1}$, $Q_{HP2}$) until a minimum pressure value ($P_{MIN}$) is reached.

6. A device according to anyone of the foregoing claims, wherein the calculation modules (47-56, 47'-56') include a first configuration change module (52), configured to be activated during transitions from a first operative condition, in which only one of the first and the second steam feeding systems (100, 101) is coupled to the steam turbine (5), to a second operating condition, in which the first and the second steam feeding systems (100, 101) are simultaneously coupled to the steam turbine (5), and further configured to pressurize the high-pressure element (7a, 8a) of the steam generator (7, 8) of the steam feeding system (100, 101) which is not initially coupled to the steam turbine (5) according tc a substantially linear ramp, until the controlled pressure ($P_{HP}$) is reached.

7. A device according to anyone of the foregoing claims, wherein the calculation modules (47-56, 47'-56') include a second configuration change module (53), configured to be activated during transitions from the second operating condition to the first operating condition of the plant (1), and further configured to determine the first pressure set point ($P_{HPCV}$) directly from the operative curve $P_{HPSP}(Q)$ and the pressure set point, between the third pressure set point ($P_{HPBP1}$) and the fifth pressure set point ($P_{HPBP2}$), corresponding to the steam feeding system (100, 101) to be decoupled from the steam turbine (5).

8. A device according to anyone of the foregoing claims, wherein the calculation modules (47-56, 47'-56') include a steam turbine controlled shutdown module (55), configured to place the high-pressure inlet valve (25) in the position control mode and to provide the regulator (40) of the high-pressure inlet valve (25) with a stop position set point ($POS_{SP}$), so as to cause the shutdown of the steam turbine (5), and to determine the third pressure set point ($P_{HPBP1}$) and the fifth pressure set point ($P_{HPBP2}$) directly from the operative curve $P_{HPSP}(Q)$.

9. A device according to anyone of the foregoing claims, wherein the calculation modules (47-56, 47'-56') include a gas turbine controlled shutdown module (56), configured to be activated in response to a simultaneous shutdown of the first gas turbine (2) and of the second gas turbine (3), and further configured to disconnect the high-pressure element (7a) of the first steam generator (7) and the high-pressure element (8a) of the second steam generator (8) from the high-pressure section (18) of the steam turbine (5), and for determining the closing of the first high-pressure bypass valve (28a) and of the second high-pressure bypass valve (28b).

10. A device according to anyone of the foregoing claims, wherein the calculation modules (47-56, 47'-56') include:

   a further first sliding pressure module (47');
   a further second sliding pressure module (48');
   a further first pressurization module (50');
   a further second pressurization module (51');
   a further first configuration change module (52');
   a further second configuration change module (53');
   a further steam turbine controlled shutdown module (55');
   a further gas turbine controlled shutdown module (56').

**Patentansprüche**

1. Steuervorrichtung für eine Dampfturbine in einer Anlage mit kombiniertem Zyklus und für ein Bypass-System davon, umfassend:

ein Erfassungsmodul (13) zum Erfassen von Messungen von Betriebsgrößen ($Q_{HP1}$, $Q_{HP2}$, $P_{HP}$) einer Anlage (1) mit kombiniertem Zyklus, umfassend eine Dampfturbine (5) und erste und zweite Dampfzuführsysteme (100, 101) die wahlweise entweder separat oder gleichzeitig mit der Dampfturbine (5) gekoppelt werden können und eine erste Gasturbine (2) und einen ersten Dampferzeuger (7) bzw. eine zweite Gasturbine (3) und einen zweiten Dampferzeuger (8) umfassen,
eine Mehrzahl von Berechnungsmodulen (47-56, 47'-56'), die darauf ausgelegt sind, je nach entsprechendem Steuerungsmodus folgendes zu bestimmen:

- wenigstens entweder einen ersten Druck-Sollwert ($P_{HPCV}$) für einen Regler (40) eines Hochdruck-Einlassventils (25) eines Hochdruck-Bereichs (18) der Dampfturbine (5) und/oder einen zweiten Druck-Sollwert ($P_{IPCV}$) für einen Regler (40) eines Mitteldruck-Einlassventils (30) eines Mitteldruck-Bereichs (19) der Dampfturbine (5),
- wenigstens entweder einen dritten Druck-Sollwert ($P_{HPBP1}$) für einen Regler (40) eines ersten Hochdruck-Bypass-Ventils (28a), das in Wirkverbindung mit einem Hochdruckelement (7a) des ersten Dampferzeugers (7) steht und/oder einen vierten Druck-Sollwert ($P_{IPBP1}$) für einen Regler (40) eines ersten Mitteldruck-Bypass-Ventils (33a), das in Wirkverbindung mit einem Mitteldruckelement (7b) des ersten Dampferzeugers (7) steht, und
- wenigstens entweder einen fünften Druck-Sollwert ($P_{HPBP2}$) für einen Regler (40) eines zweiten Hochdruck-Bypass-Ventils (29b), das in Wirkverbindung mit einem Hochdruckelement (8a) des zweiten Dampferzeugers (8) steht und/oder einen sechsten Druck-Sollwert ($P_{IPBP2}$) für einen Regler (40) eines zweiten Mitteldruck-Bypass-Ventils (33b), das in Wirkverbindung mit einem Mitteldruckelement (8b) des zweiten Dampferzeugers (8) steht; und

ein Überwachungsmodul (45), das so ausgelegt ist, dass es auf Basis der Betriebsgrößen ($Q_{HP1}$, $Q_{HP2}$, $P_{HP}$), die von dem Erfassungsmodul (13) erfasst wurden, einen Betriebszustand der Anlage (1) erkennt und in Reaktion auf den erkannten Betriebszustand wahlweise eines der Berechnungsmodule (47-56, 47'-56') aktiviert;
wobei die Betriebsgrößen ($Q_{HP}$, $P_{HP}$) eine erste Hochdruckdampf-Strömungsrate ($Q_{HP1}$), die von dem Hochdruckelement (7a) des ersten Dampferzeugers (7) geliefert wird, eine zweite Hochdruckdampf-Strömungsrate ($Q_{HP2}$), die von dem Hochdruckelement (8a) des ersten Dampferzeugers (8) geliefert wird und einen gesteuerten Druck ($P_{HP}$) in Strömungsrichtung vor dem Hochdruck-Einlassventil (25) umfassen, und wobei die Berechnungsmodule (47-56, 47'-56') ein erstes gleitendes Druckmodul (47) umfassen, das so ausgelegt ist, dass es aktiviert wird, wenn die ersten und zweiten Dampfzuführsysteme (100, 101) gleichzeitig mit der Dampfturbine (5) verbunden sind und weiter so ausgelegt ist, dass es den ersten Druck-Sollwert ($P_{HPCV}$) entsprechend einer Funktionskurve ($P_{HPSP}(Q)$) mit einem ersten konstanten Abschnitt bei einem minimalen Druckwert ($P_{MIN}$) und einem zweiten, ansteigenden Abschnitt bestimmt,
wobei das erste gleitende Druckmodul (47) so ausgelegt ist, dass es den ersten Druck-Sollwert ($P_{HPCV}$) aus der Funktionskurve ($P_{HPSP}(Q)$) auf Basis der Gleichungen

$$P_{HPCV1} = P_{HPSP}(Q_{HP1})$$

$$P_{HPCV2} = P_{HPSP}(Q_{HP2})$$

$$P_{HPCV} = \max\{P_{HPVC1}, P_{HPVC2}\} - B_{CV}$$

bestimmt,
wobei $P_{HPCV}$ der erste Druck-Sollwert ist, $P_{HPSP}(Q)$ die Funktionskurve, $Q_{HP1}$ die erste Hochdruckdampf-Strömungsrate, $Q_{HP2}$ die zweite Hochdruckdampf-Strömungsrate, und $B_{CV}$ ein erster Voreinstellwert ist,
und wobei das erste gleitende Druckmodul (47) so ausgelegt ist, dass es den dritten Druck-Sollwert ($P_{HPBP1}$) und den fünften Druck-Sollwert ($P_{HPBP2}$) aus der Funktionskurve $P_{HPSF}(Q)$ auf Basis der Gleichung

$$P_{HPBP1} = P_{HPBP2} = max\{P_{HPVC1}, P_{HPVC2}\} + B_{BP}$$

bestimmt,
wobei $P_{HPBP1}$ und $P_{HPBP2}$ der dritte Druck-Sollwert bzw. der fünfte Druck-Sollwert sind und $B_{BP}$ ein zweiter Voreinstellwert ist.

2. Vorrichtung nach Anspruch 1, worin der zweite Abschnitt der Funktionskurve ($P_{HPSP}(Q_{HP})$) im Wesentlichen linear von der ersten Hochdruckdampf-Strömungsrate ($Q_{HP1}$) und der zweiten Hochdruckdampf-Strömungsrate ($Q_{HP2}$) abhängt.

3. Vorrichtung nach einem der vorhergehenden Ansprüche, worin die Berechnungsmodule (47-56, 47'-56') ein zweites gleitendes Druckmodul (48) umfassen, das so ausgelegt ist, dass es aktiviert wird, wenn nur eines der ersten und zweiten Dampfzuführsysteme (100, 101) mit der Dampfturbine (5) verbunden ist und das weiter so ausgelegt ist, dass es den ersten Druck-Sollwert ($P_{HPCV}$), den dritten Druck-Sollwert ($P_{HPBP1}$) und den fünften Druck-Sollwert ($P_{HPBP2}$) entsprechend der Funktionskurve ($P_{HPSP}(Q)$) auf Basis der ersten Hochdruckdampf-Strömungsrate ($Q_{HP1}$) bestimmt, wenn nur das erste Dampfzuführsystem (100) mit der Dampfturbine (5) verbunden ist, und es auf Basis der zweiten Hochdruckdampf-Strömungsrate ($Q_{HP2}$) bestimmt, wenn nur das zweite Dampfzuführsystem (101) mit der Dampfturbine (5) verbunden ist.

4. Vorrichtung nach einem der vorhergehenden Ansprüche, worin die Berechnungsmodule (47-56, 47'-56') ein erstes Druckaufbaumodul (50) aufweisen, das so ausgelegt ist, dass es aktiviert wird, wenn beim Hochfahren der Anlage (1) das erste und das zweite Dampfzuführsystem (100, 101) gleichzeitig mit der Dampfturbine verbunden werden müssen, und das weiterhin dafür ausgelegt ist, den dritten Drucksollwert ($P_{HPBP1}$) und den fünften Drucksollwert ($P_{HPBP2}$) so zu bestimmen, dass die Drücke in dem Hochdruckelement (7a) des ersten Dampferzeugers (7) und in dem Hochdruckelement (8a) des zweiten Dampferzeugers (8) entsprechend einer im wesentlichen linearen Rampe, jeweils gemäß der ersten Hochdruckdampf-Strömungsrate ($Q_{HP1}$) bzw. der zweiten Hochdruckdampf-Strömungsrate ($Q_{HP2}$), ansteigen, bis der minimale Druckwert ($P_{MIN}$) erreicht ist.

5. Vorrichtung nach einem der vorhergehenden Ansprüche, worin die Berechnungsmodule (47-56, 47'-56') ein zweites Druckaufbaumodul (51) aufweisen, das so ausgelegt ist, dass es aktiviert wird, wenn beim Hochfahren der Anlage (1) nur eines der ersten und zweiten Dampfzuführsysteme (100, 101) mit der Dampfturbine verbunden werden muss, und das weiterhin so ausgelegt ist, um zwischen dem dritten Drucksollwert ($P_{HPBP1}$) und dem fünften Drucksollwert ($P_{HPBP2}$) den Druck-Sollwert zu bestimmen, der dem mit der Dampfturbine (5) verbundenen Dampfzuführsystem (100, 101) entspricht, so dass ein Druck in dem Hochdruckelement (7a, 8a) des mit der Dampfturbine (5) verbundenen Dampferzeugers (7,8) entsprechend einer im wesentlichen linearen Rampe gemäß der entsprechenden Hochdruckdampf-Strömungsrate ($Q_{HP1}$, $Q_{HP2}$) ansteigt, bis ein minimaler Druckwert ($P_{MIN}$) erreicht ist.

6. Vorrichtung nach einem der vorhergehenden Ansprüche, worin die Berechnungsmodule (47-56, 47'-56') ein erstes Modul (52) zum Ändern der Konfiguration aufweisen, das so ausgelegt ist, dass es während Übergängen von einem ersten Betriebszustand, in welchem nur eines der ersten und zweiten Dampfzuführsysteme (100, 101) mit der Dampfturbine (5) verbunden ist, zu einem zweiten Betriebszustand, in dem das erste und das zweite Dampfzuführsystem (100, 101) gleichzeitig mit der Dampfturbine (5) verbunden sind, aktiviert wird, und das weiter so ausgelegt ist, dass es das Hochdruckelement (7a, 8a) des Dampferzeugers (7,8) des Dampfzuführsystems (100 ,101), das anfangs nicht mit der Dampfturbine (5) verbunden ist, entsprechend einer im wesentlichen linearen Rampe unter Druck setzt, bis der gesteuerte Druck ($P_{HP}$) erreicht ist.

7. Vorrichtung nach einem der vorhergehenden Ansprüche, worin die Berechnungsmodule (47-56, 47'-56') ein zweites Modul (53) zum Ändern der Konfiguration aufweisen, das so ausgelegt ist, dass es während Übergängen vom zweiten Betriebszustand zum ersten Betriebszustand der Anlage (1) aktiviert wird, und das weiter so ausgelegt ist, dass es den ersten Druck-Sollwert ($P_{HPCV}$) direkt aus der Funktionskurve ($P_{HPSP}(Q)$) bestimmt und den Druck-Sollwert zwischen dem dritten Druck-Sollwert ($P_{HPBP1}$) und dem fünften Druck-Sollwert ($P_{HPBP2}$) entsprechend dem von der Dampfturbine (5) abzukoppelnden Dampfzuführsystem (100, 101) wählt.

8. Vorrichtung nach einem der vorhergehenden Ansprüche, worin die Berechnungsmodule (47-56, 47'-56') ein Modul (55) zum gesteuerten Herunterfahren der Dampfturbine umfasst, das so ausgelegt ist, dass es das das Hochdruck-Einlassventil (25) in den Positions-steuerungsmodus versetzt und dass es dem Regler (40) des Hochdruckeinlassventils (25) einen Anhaltepositions-Sollwert ($POS_{SD}$) zuführt, um so das Herunterfahren der Dampfturbine (5) zu verursachen, und dass es den dritten Druck-Sollwert ($P_{HDPB1}$) und den fünften Druck-Sollwert ($P_{HDBP2}$) direkt aus der Funktionskurve ($P_{HPSP}(Q)$) bestimmt.

9. Vorrichtung nach einem der vorhergehenden Ansprüche, worin die Berechnungsmodule (47-56, 47'-56') ein Modul (56) zum gesteuerten Herunterfahren der Gasturbinen umfasst, das so ausgelegt ist, dass es als Reaktion auf ein gleichzeitiges Abschalten der ersten Gasturbine (2) und der zweiten Gasturbine (3) aktiviert wird, und das weiter so ausgelegt ist, dass es das Hochdruckelement (7a) des ersten Dampferzeugers (7) und das Hochdruckelement (8a) des zweiten Dampferzeugers (8) von dem Hochdruck-Bereich (18) der Dampfturbine (5) abkoppelt und dass es das Schließen des ersten Hochdruck-Bypassventils (28a) und des zweiten Hochdruck-Bypassventils (28b) erkennt.

10. Vorrichtung nach einem der vorhergehenden Ansprüche, worin die Berechnungsmodule (47-56, 47'-56') weiterhin folgendes umfassen:

- ein weiteres erstes gleitendes Druckmodul (47'),
- ein weiteres zweites gleitendes Druckmodul (48'),
- ein weiteres erstes Druckaufbaumodul (50'),
- ein weiteres zweites Druckaufbaumodul (51'),
- ein weiteres erstes Modul (52') zum Ändern der Konfiguration,
- ein weiteres zweites Modul (53') zum Ändern der Konfiguration,
- ein weiteres Modul (55') zum gesteuerten Herunterfahren der Dampfturbine,
- ein weiteres Modul (56') zum gesteuerten Herunterfahren der Gasturbinen.

## Revendications

1. Dispositif de contrôle d'une turbine à vapeur d'une installation à cycle combiné et d'un système de dérivation correspondant, comprenant :

un module d'acquisition (13), permettant d'acquérir des mesures de quantités opérationnelles ($Q_{HP1}$, $Q_{HP2}$, $P_{HP}$) d'une installation à cycle combiné (1) comprenant une turbine à vapeur (5) et des premier et second systèmes d'alimentation en vapeur (100, 101), qui peuvent être couplés sélectivement, séparément ou bien simultanément, à la turbine à vapeur (5) et comprennent une première turbine à gaz (2) et un premier générateur de vapeur (7), et une seconde turbine à gaz (3) et un second générateur de vapeur (8), respectivement ;
une pluralité de modules de calcul (47-56, 47'-56'), configurés pour déterminer, en fonction des modes de contrôle correspondants :

au moins l'un d'un premier point de consigne de pression ($P_{HPCV}$) pour un régulateur (40) d'une soupape d'admission haute pression (25) d'une section haute pression (18) de la turbine à vapeur (5), et d'un deuxième point de consigne de pression ($P_{IPCV}$) pour un régulateur (40) d'une soupape d'admission de pression intermédiaire (30) d'une section de pression intermédiaire (19) de la turbine à vapeur (5) ;
au moins l'un d'un troisième point de consigne de pression ($P_{HPBP1}$) pour un régulateur (40) d'une première soupape de dérivation haute pression (28a), branchée opérationnellement à un élément haute pression (7a) du premier générateur de vapeur (7), et d'un quatrième point de consigne de pression ($P_{IPBP1}$) pour un régulateur (40) d'une première soupape de dérivation de pression intermédiaire (33a), branchée opérationnellement à un élément de pression intermédiaire (7b) du premier générateur de vapeur (7) ; et
au moins l'un d'un cinquième point de consigne de pression ($P_{HPBP2}$) pour un régulateur (40) d'une seconde soupape de dérivation haute pression (29b), branchée opérationnellement à un élément haute pression (8a) du second générateur de vapeur (8), et d'un sixième point de consigne de pression ($P_{IPBP2}$) pour un régulateur (40) d'une seconde soupape de dérivation de pression intermédiaire (33b), branchée opérationnellement à un élément de pression intermédiaire (8b) du second générateur de vapeur (8) ; et
un module de supervision (45), configuré pour détecter une condition de fonctionnement de l'installation (1) sur la base des quantités opérationnelles ($Q_{HP1}$, $Q_{HP2}$, $P_{HP}$) acquises par le module d'acquisition (13) et pour activer sélectivement l'un des modules de calcul (47-56, 47'-56') en réponse à la condition de fonctionnement détectée ;
dans lequel les quantités opérationnelles ($Q_{HP}$, $P_{HP}$) comprennent un premier débit de vapeur haute pression ($Q_{HP1}$) fourni par l'élément haute pression (7a) du premier générateur de vapeur (7), un second débit de vapeur haute pression ($Q_{HP2}$), fourni par l'élément haute pression (8a) du second générateur de vapeur (8) et une pression contrôlée ($P_{HP}$), en amont de la soupape d'admission haute pression (25), et dans lequel les modules de calcul (47-56, 47'-56') comprennent un premier module à pression glissante (47), configuré pour être activé lorsque les premier et second systèmes d'alimentation en vapeur (100, 101) sont couplés simultanément à la turbine à vapeur (5) et configuré en outre pour déterminer le premier point de consigne de la pression ($P_{HPCV}$) en fonction d'une courbe opérationnelle ($P_{HPSP}(Q)$ ayant un premier segment constant, à une valeur de pression minimale ($P_{MIN}$), et un second segment croissant ;

dans lequel le premier module à pression glissante (47) est configuré pour déterminer le premier point de consigne de pression ($P_{HPCV}$)) à partir de la courbe opérationnelle $P_{HPSP}$ (C) sur la base des équations :

$$P_{HPCV1} = P_{HPSP}(Q_{HP1})$$

$$P_{HPCV2} = P_{HPSP}(Q_{HP2})$$

$$P_{HPCV} = \max \{P_{HPCV1}, P_{HPCV2}\} - B_{CV}$$

où $P_{HPCV}$ est le premier point de consigne de pression, $P_{HPSP}(Q)$ est la courbe opérationnelle, $Q_{HP1}$ est le premier débit de vapeur haute pression, $Q_{HP2}$ est le second débit de vapeur haute pression et $B_{CV}$ est une première valeur de biais ;

et dans lequel le premier module à pression glissante (47) est configuré pour déterminer le troisième point de consigne de pression ($P_{HPBP1}$) et le cinquième point de consigne de pression ($P_{HPBP2}$) à partir de la courbe opérationnelle $P_{HPSP}(Q)$ sur la base de l'équation

$$P_{HPBP1} = P_{HPBP2} = \max\{P_{HPCV1}, P_{HPCV2}\} + B_{BP}$$

où $P_{HPBP1}$ et $P_{HPBP2}$ sont respectivement le troisième point de consigne de pression et le cinquième point de consigne de pression et $B_{BP}$ est une seconde valeur de biais.

2. Dispositif selon la revendication 1, dans lequel le second segment de la courbe opérationnelle ($P_{HPSP}(Q_{HP})$) est essentiellement linéaire par rapport au premier débit de vapeur haute pression ($Q_{HP1}$) et au second débit de vapeur haute pression ($Q_{HP2}$).

3. Dispositif selon l'une quelconque des revendications précédentes, dans lequel les modules de calcul (47-56, 47'-56') comprennent un second module à pression glissante (48), configuré pour n'être activé que lorsque l'un des premier et second systèmes d'alimentation en vapeur (100, 101) est couplé à la turbine à vapeur (5) et configuré en outre pour déterminer le premier point de consigne de pression ($P_{HPCV}$), le troisième point de consigne de pression ($P_{HPBP1}$) et le cinquième point de consigne de pression ($P_{HPBP2}$) en fonction de la courbe opérationnelle ($P_{HPSP}(Q)$) sur la base du premier débit de vapeur haute pression ($Q_{HP1}$), lorsque seul le premier système d'alimentation en vapeur (100) est couplé à la turbine à vapeur (5), et sur la base du second débit de vapeur haute pression ($Q_{HP2}$), lorsque seul le système d'alimentation en vapeur (101) est couplé à la turbine à vapeur (5).

4. Dispositif selon l'une quelconque des revendications précédentes, dans lequel les modules de calcul (47-56, 47'-56') comprennent un premier module de pressurisation (50), configuré pour être activé lorsque, au démarrage de l'installation (1), les premier et second systèmes d'alimentation en vapeur (100, 101) doivent être couplés simultanément à la turbine à vapeur (5), et configuré en outre pour déterminer le troisième point de consigne de pression ($P_{HPBP1}$) et le cinquième point de consigne de pression ($P_{HPBP2}$) de telle sorte que les pressions dans l'élément haute pression (7a) du premier générateur de vapeur (7) et dans l'élément haute pression (8a) du second générateur de vapeur (8) augmentent selon une rampe sensiblement linéaire, en fonction du premier débit de vapeur haute pression ($Q_{HP1}$) et du second débit de vapeur haute pression ($Q_{HP2}$), respectivement, jusqu'à ce que la valeur de pression minimale ($P_{MIN}$) soit atteinte.

5. Dispositif selon l'une quelconque des revendications précédentes, dans lequel les modules de calcul (47-56, 47'-56') comprennent un second module de pressurisation (51), configuré pour être activé lorsque, au démarrage de l'installation (1), seul l'un des premier et second systèmes d'alimentation en vapeur (100, 101) doit être couplé à la turbine à vapeur (5), et est configuré en outre pour déterminer, entre le troisième point de consigne de pression ($P_{HPBP1}$) et le cinquième point de consigne de pression ($P_{HPBP2}$), le point de consigne de pression correspondant au système d'alimentation en vapeur (100, 101) couplé à la turbine à vapeur (5), de telle sorte qu'une pression dans l'élément haute pression (7a, 8a) du générateur de vapeur (7, 8) du système d'alimentation en vapeur (100, 101) couplé à la turbine à vapeur (5) augmente selon une rampe sensiblement linéaire, en fonction du débit de vapeur haute pression correspondant ($Q_{HP1}$, $Q_{HP2}$), jusqu'à ce qu'une valeur de pression minimale ($P_{MIN}$) soit atteinte.

6. Dispositif selon l'une quelconque des revendications précédentes, dans lequel les modules de calcul (47-56, 47'-56') comprennent un premier module de changement de configuration (52), configuré pour être activé au cours de passages d'une première condition opérationnelle, dans laquelle seul l'un des premier et second systèmes d'alimentation en vapeur (100, 101) est couplé à la turbine à vapeur (5), à une seconde condition opérationnelle, dans laquelle les premier et second systèmes d'alimentation en vapeur (100, 101) sont couplés simultanément à la turbine à vapeur (5), et configuré en outre pour mettre sous pression l'élément haute pression (7a, 8a) du générateur de vapeur (7, 8) du système d'alimentation en vapeur (100, 101) qui n'est pas initialement couplé à la turbine à vapeur (5) selon une rampe sensiblement linéaire, jusqu'à ce que la pression contrôlée ($P_{HP}$) soit atteinte.

7. Dispositif selon l'une quelconque des revendications précédentes, dans lequel les modules de calcul (47-56, 47'-56') comprennent un second module de changement de configuration (53), configuré pour être activé au cours de passages de la seconde condition opérationnelle à la première condition opérationnelle de l'installation (1), et configuré en outre pour déterminer le premier point de consigne de pression ($P_{HPCV}$) directement à partir de courbe opérationnelle $P_{HPSP}$ (Q) et du point de consigne de pression, entre le troisième point de consigne de pression ($P_{HPBP1}$) et le cinquième point de consigne de pression ($P_{HPBP2}$), correspondant au système d'alimentation en vapeur (100, 101) pour être découplé de la turbine à vapeur (5).

8. Dispositif selon l'une quelconque des revendications précédentes, dans lequel les modules de calcul (47-56, 47'-56') comprennent un module d'arrêt contrôlé de turbine à vapeur (55), configuré pour placer la soupape d'admission haute pression (25) dans le mode de contrôle de position et pour fournir au régulateur (40) de la soupape d'admission haute pression (25) un point de consigne de position d'arrêt ($POS_{SD}$), de manière à amener l'arrêt de la turbine à vapeur (5), et pour déterminer le troisième point de consigne de pression ($P_{HPBP1}$) et le cinquième point de consigne de pression ($P_{HPBP2}$) directement à partir de la courbe opérationnelle $P_{HPSP}$ (Q).

9. Dispositif selon l'une quelconque des revendications précédentes, dans lequel les modules de calcul (47-56, 47'-56') comprennent un module d'arrêt contrôlé de turbine à gaz (56), configuré pour être activé en réponse à un arrêt simultané de la première turbine à gaz (2) et de la seconde turbine à gaz (3), et configuré en outre pour débrancher l'élément haute pression (7a) du premier générateur de vapeur (7) et l'élément haute pression (8a) du second générateur de vapeur (8) de la section haute pression (18) de la turbine à vapeur (5), et pour déterminer la fermeture de la première soupape de dérivation haute pression (28a) et de la seconde soupape de dérivation haute pression (28b).

10. Dispositif selon l'une quelconque des revendications précédentes, dans lequel les modules de calcul (47-56, 47'-56') comprennent :

un autre premier module à pression glissante (47') ;
un autre second module à pression glissante (48') ;
un autre premier module de pressurisation (50') ;
un autre second module de pressurisation (51') ;
un autre premier module de changement de configuration (52') ;
un autre second module de changement de configuration (53') ;
un autre module d'arrêt contrôlé de turbine à vapeur (55') ;
un autre module d'arrêt contrôlé de turbine à gaz (56').

Fig.1

EP 2 157 290 B1

Fig.2

Fig.3

EP 2 157 290 B1

Fig.4

Fig.5

47     SLIDING PRESSURE 1

48     SLIDING PRESSURE 2

CONSTANT PRESSURE     49

50     PRESSURIZATION 1

51     PRESSURIZATION 2

52     CONFIGURATION CHANGE
1+1 → 2+1

53     CONFIGURATION CHANGE
2+1 → 1+1

55     GAS TURBINE
CONTROLLED SHUTDOWN

56     STEAM TURBINE
CONTROLLED SHUTDOWN

SUPERVISION

45

$P_{HPCV}$            $P_{HPBP1}$
                                       $P_{HPBP2}$

# Fig.6

Fig.7

Fig.8

Fig.9

Fig.10

Fig.11

Fig.12

47' SLIDING PRESSURE 1

48' SLIDING PRESSURE 2

CONSTANT PRESSURE 49'

50' PRESSURIZATION 1

51' PRESSURIZATION 2

52' CONFIGURATION CHANGE
1+1 → 2+1

53' CONFIGURATION CHANGE
2+1 → 1+1

55' GAS TURBINE
CONTROLLED SHUTDOWN

56' STEAM TURBINE
CONTROLLED SHUTDOWN

SUPERVISION
45'

P$_{IPCV}$

P$_{IPBP1}$
P$_{IPBP2}$

Fig.13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4201924 A